# FASCICULE DE BREVET EUROPEEN

(11) **EP 1 498 361 B1**
(45) Date de publication et mention de la délivrance du brevet: **24.10.2007**
(21) Numéro de dépôt: 03291550.6
(22) Date de dépôt: 24.06.2003
(51) Int. Cl.: B65D 67/02, A45D 40/24, F16B 2/20

(54) **Dispositif pour la présentation groupée de deux articles**
Vorrichtung zur gruppenweisen Zurschaustellung von zwei Artikeln
Device for clustered displaying of two articles

(43) Date de publication de la demande: 19.01.2005
(73) Titulaire: L'ORÉAL, 75008 Paris (FR)
(72) Inventeur: Rousselet, Guilhem, 94100 Saint Maur des Fossés (FR)
(74) Mandataire: Julio, Charlotte

(56) Documents cités:
- CH-A- 447 929
- US-A- 5 191 975
- US-B1- 6 533 148

## Description

La présente invention a trait à un accessoire pour la présentation groupée d'au moins deux articles, en particulier deux articles à usage cosmétique. Il peut s'agir notamment de deux produits différents ou, d'un produit et d'un accessoire, notamment pour l'application du produit.

Dans le domaine du maquillage notamment, de plus en plus fréquemment, la sophistication du maquillage implique l'utilisation de deux produits complémentaires à appliquer séparément.

C'est le cas par exemple pour le maquillage des lèvres, avec un premier produit apportant la couleur, et un second produit, dit "de finition", pour, si besoin est, donner de la brillance ou des propriétés de non-transfert au premier produit. C'est le cas également pour d'autres produits de maquillage, en particulier pour les yeux ou pour les ongles, l'un des produits pouvant être une base de maquillage, l'autre étant le produit de maquillage proprement dit.

Dans le cas de ces deux produits complémentaires, il convient donc de disposer de deux conditionnements qui doivent pouvoir être disponibles, soit simultanément, soit indépendamment l'un de l'autre, selon les habitudes et les besoins de la consommatrice.

Ainsi, se pose le problème de pouvoir disposer d'un dispositif permettant, sélectivement :
i) d'avoir les deux produits de manière groupée, de manière à pouvoir disposer à tout moment des deux produits ; ou
ii) de les avoir de manière séparée, notamment lorsque la consommatrice, pour une journée, ou pour une soirée, n'a besoin par exemple que du produit de finition.

Dans le cas de la seconde alternative, il est important :
a) d'une part que l'accessoire servant à solidariser les deux produits ne se perde pas lorsque les deux articles sont séparés l'un de l'autre , et
b) d'autre part, que l'accessoire, quand il reste solidaire de l'un des produits seulement, n'en gène pas l'utilisation et n'en augmente pas de manière sensible l'encombrement.

Dans le domaine de l'alimentaire en particulier, sont connus des dispositifs permettant de grouper, sous forme d'un "pack" deux ou plusieurs articles, par exemple des bouteilles d'eau ou de lait.

De tels dispositifs sont décrits par exemple dans les documents US-A-4 856 647, US-A-4 620 631, US-A-3 036 853, ou US-5,191,975. Les dispositifs décrits dans ces documents sont constitués d'une structure rigide définissant une pluralité de boucles ouvertes destinées chacune à coopérer par encliquetage avec le col d'une bouteille correspondante, de manière à grouper 6 ou 8 bouteilles. Lorsqu'une ou plusieurs bouteilles sont enlevées du pack, la ou les portions de boucle "inoccupées" génèrent un surcroît d'encombrement inutile.

Notamment, le document US-5,191,975 ne décrit que des structures rendues fonctionelles uniquement dans des configurations où les boucles sont définies dans un même plan et non superposables.

Le brevet US-A-3 702 203 décrit un système constitué d'une lanière souple se terminant par deux boucles destinées à former une poignée pour le transport groupé de deux bouteilles, la fixation de l'une relativement à l'autre étant réalisée en faisant faire à la lanière souple une double boucle en forme de 8, et en insérant le col de chacune des bouteilles à l'intérieur de l'une des portions de la boucle en 8.

L'inconvénient majeur d'une telle configuration tient au fait que l'assemblage des deux bouteilles au moyen d'une telle lanière souple, en raison de la complexité de la gestuelle requise, peut difficilement être fait de manière automatisée. En outre, après enlèvement de l'une des bouteilles, la lanière ne peut pas rester solidaire de l'autre bouteille. Ainsi désolidarisée à la fois de l'une et l'autre des bouteilles, le risque est grand pour que la lanière se perde.

Les documents US-3,924,738 et FR-2,771,388 décrivent des systèmes comportant au moins deux boucles reliées entre elles par une anse souple. Chaque boucle présente un orifice circulaire permettant d'y retenir solidement un article. Mais ces dispositifs posent un problème car du fait des moyens de rétention présentés sur le pourtour intérieur de ces orifices, de fait ils ne sont pas flexibles. En effet, il est difficile de retirer complètement et ensuite de replacer les articles dans leur orifices, et ce à plusieurs reprises. De plus, pour retirer un article de son orifice, il est nécessaire de le faire coulisser sur toute sa longueur au travers de l'orifice, ce qui interdit la possibilité de pouvoir retenir des articles non nécessairement cylindriques dans de tels orifices.

Aussi, est-ce un des objets de l'invention que de réaliser un dispositif permettant de résoudre en tout ou partie les problèmes discutés ci-avant en référence à certains dispositifs conventionnels tels que discutés ci-avant.

C'est en particulier un objet de l'invention que de réaliser un tel dispositif qui permette la présentation groupée d'au moins deux produits, et qui permette lorsque les deux articles sont séparés l'un de l'autre, de rester solidaire de l'un sans en augmenter de manière indue l'encombrement, et sans en gêner l'utilisation.

C'est un autre objet de l'invention que de réaliser un tel dispositif qui soit simple d'utilisation et économique à réaliser.

Le dispositif selon l'invention résoud les problèmes ci dessus en proposant des moyens pour retenir les articles par encliquetage, ces moyens formant une pince. La pince est par exemple formée par deux bras élastiquement déformables présentant un pourtour intérieur complémentaire des au moins deux articles pouvant y être retenus. Par exemple, ces bras sont disposés en arc de cercle, et la pince forme une boucle ouverte, en vue de dessus.

D'autres objets encore apparaîtront dans la description détaillée qui suit.

Selon l'invention, ces objets sont atteints en réalisant un dispositif pour la présentation groupée d'au moins deux articles, comprenant un premier élément apte à être fixé de manière amovible sur un premier article, un second élément, relié au premier, et apte à être fixé sur un second article, de manière à permettre de maintenir fixement le premier article relativement au second, le dispositif étant configuré de manière à pouvoir occuper une position dans laquelle lesdits premier et second éléments sont fixés tous les deux sur le même desdits premier ou second articles, le premier élément et le deuxième élément comportent respectivement des moyens en forme de pince pour être fixés sur les articles et en ce que l'élément de liaison est une bande souple.

De préférence, la fixation du second élément sur le second article est également amovible.

De préférence, par "maintenir fixement", on entend maintenir à distance sensiblement fixe l'un de l'autre. Dans le cas d'articles ayant un axe longitudinal, la distance entre les deux articles s'entend de la distance entre axes.

Ainsi, avec la configuration selon l'invention, les deux articles peuvent être :
i) soit présentés de manière groupée, en étant maintenus fixes l'un relativement à l'autre ;
ii) soit séparés l'un de l'autre, auquel cas le dispositif de fixation reste solidaire de l'un des articles, l'élément servant à la fixation de l'article qui a été enlevé pouvant lui même se fixer sur l'article restant, permettant ainsi ce dernier, de ne pas être d'encombrement sensiblement accru.

Avantageusement, un moyen en forme de pince comporte deux bras élastiquement déformables et la fixation amovible du premier élément (respectivement du second) sur le premier article (respectivement sur le second) s'opère par encliquetage.

Par "encliquetage" on entend un accrochage résultant de la déformation élastique d'au moins une première portion du premier élément (respectivement du second), lors de sa mise en engagement avec une seconde portion du premier article (respectivement du second), et du retour dans une position de non déformation ou de moindre déformation de ladite première portion après franchissement de ladite seconde portion, le degré de déformation résiduel après franchissement de ladite second portion déterminant, le cas échéant, le degré de serrage de l'élément de fixation sur l'article correspondant.

Un tel encliquetage peut se faire sur un article de section circulaire, ou de section ayant toute autre forme, en particulier carré, hexagonale, pentagonale ou hexagonale.

Ainsi, le dispositif peut être obtenu de moulage d'un matériau thermoplastique tel qu'un polyéthylène, un polypropylène, un SBS, un SEBS, un mélange de deux ou plusieurs de ces matériaux, ou un polymère thermodurcissable. D'autres matériaux encore peuvent être utilisés.

Dans la réalité, dans le cas du mode de réalisation du dispositif en une seule pièce moulée et dans lequel l'accrochage des éléments de fixation sur les articles se fait par encliquetage, plusieurs facteurs sont à prendre en compte :
i) le matériau doit être apte à se déformer élastiquement sans casser ;
ii) le matériau doit être suffisamment rigide pour, une fois l'encliquetage réalisé, assurer un accrochage solide des éléments de fixation sur les articles ; et
ii) le matériau doit être apte à subir de multiples flexions, d'un angle d'environ 180°, sans se rompre.

Une possibilité consiste à utiliser éventuellement deux matériaux différents, l'un, pour former la liaison entre les deux éléments de fixation, et choisi pour sa souplesse et ses bonnes propriétés de résistance à la flexion , l'autre pour former les éléments de fixation, et choisi à la fois pour ses propriétés de rigidité et de résistance à la déformation élastique.

Dans ce cas, le dispositif peut être réalisé par bi-injection ou surmoulage de deux matériaux physico-chimiquement compatibles.

Alternativement, les premier et second éléments sont moulés séparément, dans un moule (le même, si les premier et second éléments sont identiques), puis raccordés l'un à l'autre par soudure haute fréquence.

Avantageusement,
i) le premier élément comprend une première boucle ouverte dont deux extrémités délimitent une ouverture via laquelle le premier élément est encliqueté sur une portion du premier article de section correspondant à une section interne de la première boucle ouverte;
ii) le second élément comprend une seconde boucle ouverte dont deux extrémités délimitent une ouverture via laquelle le second élément est encliqueté sur une portion du second article de section correspondant à une section interne de la seconde boucle ouverte ;
iii) les premier et second éléments sont reliés par un élément de liaison disposé de préférence à l'opposé de l'ouverture des première et seconde boucles, et configuré de manière à ce que le dispositif puisse passer d'une première position dans laquelle les premier et second éléments sont situés de part et d'autre d'un plan perpendiculaire au plan moyen des première et seconde boucles ouvertes à une seconde position dans laquelle les premier et second éléments sont situés de part et d'autre d'un plan parallèle au plan moyen des première et seconde boucles.

De préférence, les première et seconde boucles ouvertes sont de section interne circulaire, les premier et second articles étant sur au moins une partie de leur hauteur, de section circulaire correspondante.

Dans ce dernier cas de figure, la portion de cercle formée par lesdites première et seconde boucles ouvertes s'étend sur plus de 180°, et de préférence, sur un angle allant environ de 190° à 315°.

Toujours selon cette configuration, les portions de section circulaire des deux articles sont de diamètre voisin, voire identique. Avec des éléments de fixation identiques, les éventuelles différences de diamètre des deux articles, à condition de rester dans une certaine limite, entraînent simplement des différences de degré de serrage des premier et second éléments de fixation sur les premier et second articles, ou d'amplitude de jeu lorsqu'il n'y à pas de serrage. Dans ce dernier cas toutefois, on prévoira sur les premier et second articles des moyens, notamment sous forme de butées axiales pour empêcher sensiblement tout mouvement axial relatif entre les éléments de fixation et lesdits articles.

Avantageusement, le rayon de la portion de cercle formée par au moins l'une desdites première et seconde boucles ouvertes est inférieur ou égal au rayon de ladite portion de section circulaire du premier article et au rayon de ladite portion de section circulaire du second article. Dans ces conditions, l'un au moins des éléments de fixation exerce un serrage sur l'article auquel il est fixé.

A titre indicatif, le rayon de la portion de cercle formée par au moins l'une desdites première et seconde boucles est inférieur d'environ 1 à 10% au rayon de ladite portion de section circulaire du premier article et au rayon de ladite portion de section circulaire du second article.

Les premier et second éléments sont de préférence identiques, rendant ainsi indifférente l'utilisation de l'un quelconque des premier et second éléments avec l'un quelconque des premier et second articles.

Les première et seconde boucles ouvertes peuvent être reliées directement l'une avec l'autre, ou se raccorder en deux points diamétralement opposés d'une boucle fermée.Ainsi, une première boucle ouverte est destinée à s'accrocher par encliquetage sur un premier article. La boucle fermée est enfilée sur un troisième article par l'une des extrémités de ce dernier, et maintenue par serrage sur ledit troisième article. Une seconde boucle ouverte est destinée à s'accrocher par encliquetage sur un second article. De ce fait, en position montée, les trois articles sont disposés côte à côte, le troisième article étant disposé entre les premier et second articles. A l'utilisation, les possibilités sont diverses en fonction de la nature des trois articles. Ainsi par exemple, la consommatrice peut séparer les premier et second articles de leurs éléments de fixation respectifs, ces dernier étant alors repliés à 180° et fixés par encliquetage sur le troisième article, de part et d'autre de la boucle fermée.

Selon un autre aspect de l'invention, on réalise un ensemble comprenant :
i) un premier article, notamment sous forme d'un récipient contenant un premier produit, en particulier cosmétique ;
ii) un second article, notamment sous forme d'un récipient contenant un second produit, en particulier cosmétique, ou d'un accessoire pour l'application du premier produit ;
les premier et second articles étant maintenus fixement l'un relativement à l'autre au moyen d'un dispositif selon l'invention.

De préférence, sur au moins une portion de leur hauteur, les premier et second articles sont de section circulaire. De préférence encore, les premier et second articles forment sensiblement un cylindre sut la totalité de leur hauteur.

Avantageusement, le premier article contient un premier produit de maquillage, notamment pour les lèvres ou les cils, et le second article contenant un deuxième produit destiné à modifier l'aspect du premier, notamment sa brillance. De préférence, le deuxième produit est destiné à coopérer avec le premier produit pour obtenir un maquillage de la même zone.

L'invention consiste, mises à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- la figure 1 représente une vue éclatée d'un ensemble de deux articles cosmétiques destinés à être solidarisés l'une de l'autre au moyen d'un dispositif de fixation selon un premier mode de réalisation de l'invention ;
- la figure 2 représente une vue en position assemblée de l'ensemble représenté à la figure 1 ;
- la figure 3 représente l'ensemble de la figure 2, dans lequel l'un des articles a été enlevé, les deux éléments de fixation étant accrochés sur l'autre article ; et
- les figures 4A et 4B représentent une variante du dispositif d'accrochage utilisé dans les figures 1 à 3.

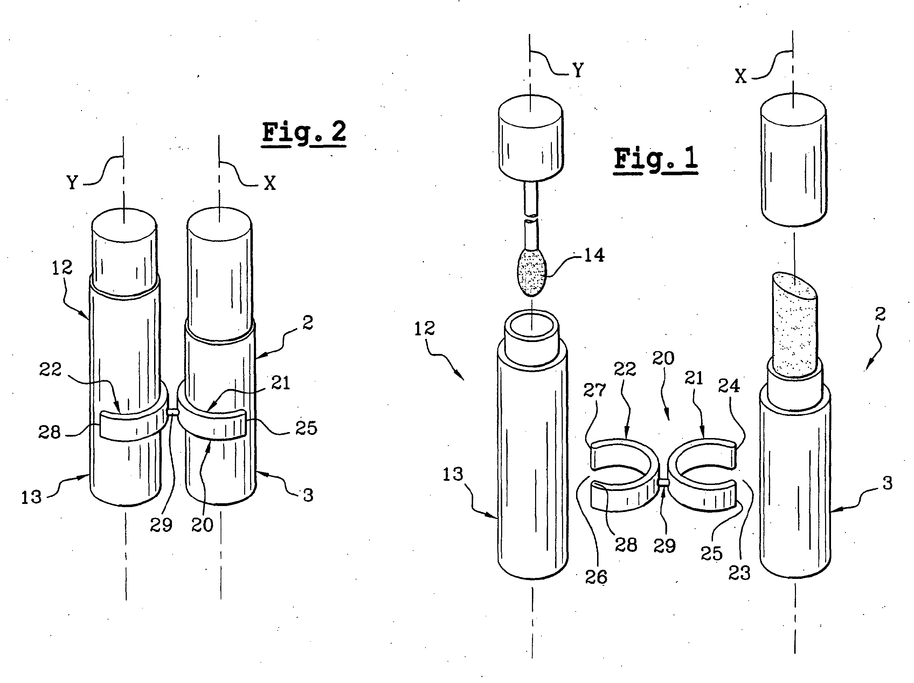

L'ensemble 1 qui va être maintenant décrit en référence aux figures 1 à 3 comprend un premier article, cosmétique 2 sous forme d'un étui cylindrique 3, d'axe longitudinal X, et contenant un raisin solide de rouge à lèvres.

Il comprend en outre un second article 12 sous forme d'un étui cylindrique 13 d'axe longitudinal Y. Le diamètre extérieur de l'étui cylindrique 13, est sensiblement identique à celui de l'étui cylindrique 3. L'étui cylindrique 13 définit un réservoir contenant une composition liquide destinée à être appliquée sur les lèvres après application du produit contenu dans le premier article cosmétique, de manière à en modifier la brillance. A cet effet, un applicateur 14 est solidaire d'un bouchon destiné à obturer le réservoir.

L'ensemble comprend en outre un dispositif 20 permettant de présenter de façon groupée les deux articles 2 et 12.

Le dispositif 20 est obtenu de moulage d'un polyéthylène. Il comprend deux portions de boucle identiques 21 et 22.

La portion de boucle 21 comprend une ouverture 23 configurée de manière à s'engager par encliquetage avec l'étui cylindrique 3 de l'étui de rouge à lèvres. A cet effet, la distance entre les bords 24 et 25 délimitant l'ouverture 23 est inférieure d'environ 5 à 10 % au diamètre extérieur de l'étui 3. Le diamètre intérieur de la portion de boucle 21 est de 5% inférieur au diamètre extérieur de l'étui 3, de manière à ce que la portion de boucle 21, une fois montée sur l'étui 3, serre ce dernier.

La portion de boucle 22 comprend une ouverture 26 configurée de manière à s'engager par encliquetage avec l'étui cylindrique 13 contenant la composition liquide. A cet effet, la distance entre les bords 27 et 28 délimitant l'ouverture 26 est inférieure au diamètre extérieur de l'étui. Le diamètre intérieur de la portion de boucle 22 est de 5% inférieur au diamètre extérieur de l'étui 13, de manière à ce que la portion de boucle 22, une fois montée sur l'étui 13, serre ce dernier.

Entre les deux portions de boucle 21 et 22, à l'opposé des ouvertures 23 et 26, est disposé un élément de liaison 29 sous forme d'une bande cylindrique de courte longueur (de l'ordre de quelques mm).

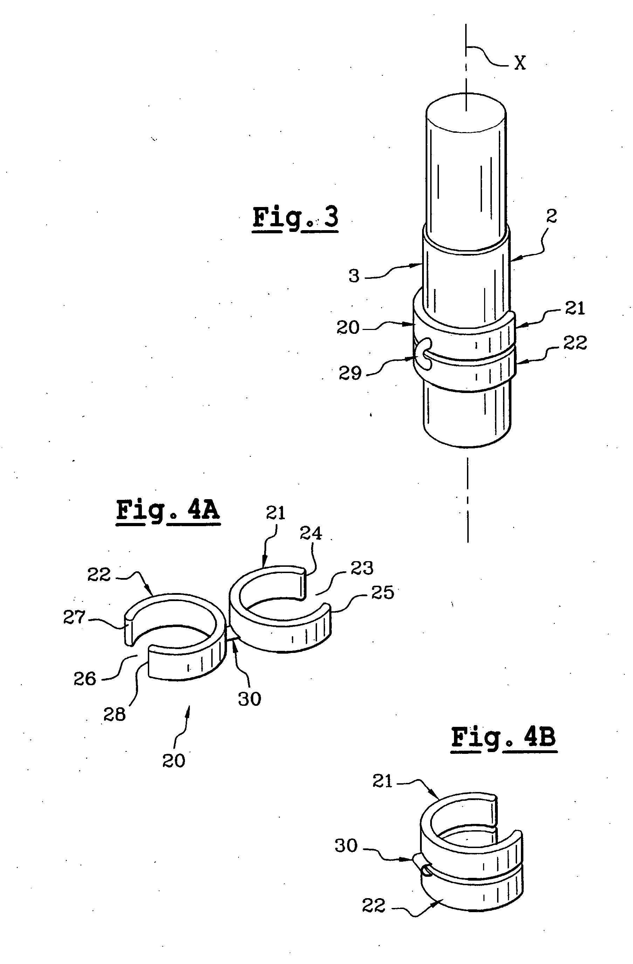

La bande 29 doit être :
i) suffisamment courte pour, lorsque le dispositif 20 est dans la position de la figure 2, c'est à dire avec les deux portions de boucle 21 et 22 situées l'une à côté de l'autre, assurer une liaison relativement rigide entre les deux portions de boucle ; et
ii) suffisamment longue pour pouvoir être mise dans la configuration de la figure 3 dans laquelle les deux portions de boucle 21 et 22 sont disposées l'une sur l'autre, et fixées sur le même article.

Sur la vue de la figure 2, l'ensemble 1 est représenté sous forme assemblée. Dans cette position, la portion de boucle 21 est encliquetée sur l'étui 3. La portion de boucle 22 est encliquetée sur l'étui 13, ce dernier étant ainsi maintenu sensiblement fixement relativement à l'étui 3.

Lorsque les deux articles 2 et 12 doivent être séparés, l'un des articles 12 est retiré du dispositif de fixation 20. La portion de boucle 22 est alors repliée à 180° de manière à s'engager par encliquetage sur l'article 2, en se positionnant en dessous de la portion de boucle 21. Comme il apparaît sur la figure 3, dans cette configuration, l'encombrement de l'étui 2 n'est pas accru de manière sensible.

Dans la variante illustrée aux figures 4A et 4B, la bande de liaison 29 est remplacée par une charnière film 30. Le dispositif selon cette variante est par ailleurs en tous points identique à celui du mode de réalisation précédent. Son fonctionnement est inchangé.

Dans la description détaillée qui précède, il a été fait référence à des modes de réalisation préférés de l'invention. Il est évident que des variantes peuvent y être apportées sans s'écarter de l'objet de la protection telle que revendiquée ci-après.

## Revendications

1. Dispositif (20) pour la présentation groupée d'au moins deux articles, comprenant un premier élément (21) apte à être fixé de manière amovible sur un premier article (2), un second élément (22), relié au premier élément par un élément de liaison (29), étant apte à être fixé sur un second article (12), de manière à permettre de maintenir fixement le premier article relativement au second dans une première position, le dispositif étant configuré de manière à pouvoir occuper une seconde position dans laquelle lesdits premier et second éléments (21, 22) sont fixés tous les deux sur le même desdits premier ou second articles,
**caractérisé en ce que** le premier élément et le deuxième élément comportent respectivement des moyens en forme de pince pour être fixés sur les articles et **en ce que** l'élément de liaison est une bande souple.

2. Dispositif (20) selon la revendication 1 **caractérisé en ce qu**'une pince comporte deux bras élastiquement déformables et la fixation amovible du premier élément (21), respectivement du second (22), sur le premier article (2), respectivement sur le second (3), s'opère par encliquetage.

3. Dispositif (20) selon la revendication 1 ou 2 **caractérisé en ce que** l'élément de liaison est configuré pour tolérer de multiples flexions, d'un angle d'environ 180°, sans se rompre.

4. Dispositif (20) selon l'une quelconque des revendications 1 à 3 **caractérisé en ce que** l'élément de liaison est court de manière à assurer une liaison rigide entre les deux éléments lorsqu'il est dans la première position.

5. Dispositif (20) selon l'une quelconque des revendications 1 à 4 **caractérisé en ce que** l'élément de liaison est une bande cylindrique, de section transversale circulaire.

6. Dispositif (20) selon l'une quelconque des revendications 1 à 5 **caractérisé en ce qu**'il est obtenu de moulage d'au moins un matériau thermoplastique tel qu'un polyéthylène, un polypropylène, un SBS, un SEBS, un mélange de deux ou plusieurs de ces matériaux, ou d'un polymère thermodurcissable.

7. Dispositif (20) selon l'une quelconque des revendications 1 à 6 **caractérisé en ce que**:
i) le premier élément (21) comprend une première boucle ouverte (21) dont deux extrémités (24, 25) délimitent une ouverture (23) via laquelle le premier élément est encliqueté sur une portion (3) du premier article (2) de section correspondant à une section interne de ladite première boucle ouverte ;
ii) le second élément (22) comprend une seconde boucle ouverte (22) dont deux extrémités (27, 28) délimitent une ouverture (26) via laquelle le second élément est encliqueté sur une portion (13) du second article (12) de section correspondant à une section interne de ladite seconde boucle ouverte ;
iii) les premier et second éléments sont reliés par un élément de liaison (29, 30) disposé de préférence à l'opposé de l'ouverture (23, 26) des première et seconde boucles (21, 22), et configuré de manière à ce que le dispositif puisse passer de la première position dans laquelle les premier et second éléments (21, 22) sont situés côte à côte, de part et d'autre d'un plan perpendiculaire au plan moyen des première et seconde boucles à la seconde position dans laquelle les premier et second éléments (21, 22) sont situés l'un au dessus de l'autre, de part et d'autre d'un plan parallèle au plan moyen des première et seconde boucles.

8. Dispositif (20) selon la revendication 7 **caractérisé en ce que** les sections interne desdites première et seconde boucles ouvertes (21, 22) ainsi que les sections desdites portions (3, 13) desdits premier et second articles (2, 12) sont de forme circulaire.

9. Dispositif (20) selon la revendication 7 ou 8 **caractérisé en ce que** les premier et second éléments (21, 22) sont identiques.

10. Dispositif (20) selon l'une quelconque des revendications 7 à 9 **caractérisé en ce que** la portion de cercle formée par lesdites première et seconde boucles (21, 22) s'étend sur plus de 180°, et de préférence, sur un angle allant environ de 190° à 315°.

11. Dispositif (20) selon l'une quelconque des revendications 7 à 10 **caractérisé en ce que** le rayon de la portion de cercle formée par au moins l'une desdites première et seconde boucles (21, 22) est inférieur ou égal au rayon de ladite portion de section circulaire (3) du premier article (2) et au rayon de ladite portion de section circulaire (13) du second article (12).

12. Dispositif (20) selon la revendication 11 **caractérisé en ce que** le rayon de la portion de cercle formée par au moins l'une desdites première et seconde boucles (21, 22) est inférieur d'environ 1 à 10% au rayon de ladite portion de section circulaire (3) du premier article (2) et au rayon de ladite portion de section circulaire (13) du second article (12).

13. Ensemble (1) comprenant :
i) un premier article (2), notamment sous forme d'un récipient contenant un premier produit, en particulier cosmétique ;
ii) un second article (12), notamment sous forme d'un récipient contenant un second produit, en particulier cosmétique, ou d'un accessoire pour l'application dudit premier produit, les premier et second articles étant maintenus fixement l'un relativement à l'autre au moyen d'un dispositif (20) selon l'une quelconque des revendications 1 à 12.

14. Ensemble (1) selon la revendication 13 **caractérisé en ce que** le premier article (2) contient un premier produit de maquillage, notamment pour les lèvres ou les cils, le second article (12) contenant un deuxième produit destiné à modifier l'aspect du premier, notamment sa brillance.

## Claims

1. Device (20) for clustered displaying of at least two articles, comprising a first element (21) removably attachable to a first article (2), and a second element (22) connected to the first element by a connecting element (29) and attachable to a second article (12), in such a way as to enable the first article to be held in a fixed position relative to the second in a first position, the device being configured in such a way as to be able to occupy a second position in which said first and second elements (21, 22) are both attached either to the first or to the second of said articles,
**characterized in that** the first element and the second element each comprise clip means for their attaching to the articles and **in that** the connecting element is a flexible band.

2. Device (20) according to Claim 1, **characterized in that** a clip has two elastically deformable arms and the removable attachment of the first (21) or second (22) element to the first (2) or second (3) article, respectively, is effected by a snap action.

3. Device (20) according to Claim 1 or 2, **characterized in that** the connecting element is configured to tolerate multiple bendings through an angle of approximately 180° without breaking.

4. Device (20) according to any one of Claims 1 to 3, **characterized in that** the connecting element is short to ensure a rigid connection between the two elements when it is in the first position.

5. Device (20) according to any one of Claims 1 to 4, **characterized in that** the connecting element is a cylindrical band of circular cross section.

6. Device (20) according to any one of Claims 1 to 5, **characterized in that** it is obtained by moulding at least one thermoplastic such as a polyethylene, a polypropylene, an SBS, an SEBS, a blend of two or more of these materials, or a thermosetting polymer.

7. Device (20) according to any one of Claims 1 to 6, **characterized in that**:
i) the first element (21) comprises a first open loop (21) whose two ends (24, 25) define an opening (23) by which the first element is clipped onto a portion (3) of the first article (2), whose cross section corresponds to an internal cross section of said first open loop;
ii) the second element (22) comprises a second open loop (22) whose two ends (27, 28) define an opening (26) by which the second element is clipped onto a portion (13) of the second article (12), whose cross section corresponds to an internal cross section of said second open loop; and
iii) the first and second elements are connected by a connecting element (29, 30) preferably opposite the openings (23, 26) of the first and second loops (21, 22), said connecting element (29, 30) being configured in such a way that the device can be changed from the first position, in which the first and second elements (21, 22) are side by side on either side of a plane that is perpendicular to the mid-plane of the first and second loops, to the second position, in which the first and second elements (21, 22) are one above the other on either side of a plane that is parallel to the mid-plane of the first and second loops.

8. Device (20) according to Claim 7, **characterized in that** the internal cross sections of said first and second open loops (21, 22) and the cross sections of said portions (3, 13) of said first and second articles (2, 12) are circular.

9. Device (20) according to Claim 7 or 8, **characterized in that** the first and second elements (21, 22) are identical.

10. Device (20) according to any one of Claims 7 to 9, **characterized in that** the portion of a circle formed by said first and second loops (21, 22) extends through more than 180°, and preferably through an angle of approximately from 190° to 315°.

11. Device (20) according to any one of Claims 7 to 10, **characterized in that** the radius of the portion of a circle formed by one or both of said first and second loops (21, 22) is less than or equal to the radius of said circular-section portion (3) of the first article (2) and less than or equal to the radius of said circular-section portion (13) of the second article (12).

12. Device (20) according to Claim 11, **characterized in that** the radius of the portion of a circle formed by one or both of said first and second loops (21, 22) is approximately 1 to 10% less than the radius of said circular-section portion (3) of the first article (2) and than the radius of said circular-section portion (13) of the second article (12).

13. Assembly (1) comprising:
i) a first article (2), especially one in the form of a receptacle containing a first product, particularly a cosmetic;
ii) a second article (12) especially one in the form of a receptacle containing a second product, particularly a cosmetic, or in the form of an accessory for applying said first product, the first and second articles being held in fixed positions relative to each other by means of a device (20) according to any one of Claims 1 to 12.

14. Assembly (1) according to Claim 13, **characterized in that** the first article (2) contains a first make-up product, especially one for the lips or eyelashes, while the second article (12) contains a second product for modifying the appearance of the first, especially its gloss.

## Patentansprüche

1. Vorrichtung (20) zur gruppierten Darbietung von mindestens zwei Artikeln, die ein erstes Element (21) aufweist, das lösbar an einem ersten Artikel (2) befestigt werden kann, wobei ein zweites Element (22), das mit dem ersten Element über ein Verbindungselement (29) verbunden ist, geeignet ist, um an einem zweiten Artikel (12) befestigt zu werden, um es zu ermöglichen, den ersten Artikel bezüglich des zweiten in einer ersten Stellung ortsfest zu halten, wobei die Vorrichtung so konfiguriert ist, dass sie eine zweite Stellung einnehmen kann, in der das erste und das zweite Element (21, 22) beide am gleichen der ersten oder zweiten Artikel befestigt sind,
**dadurch gekennzeichnet, dass** das erste Element und das zweite Element je Mittel in Form einer Klammer aufweisen, um an den Artikeln befestigt zu werden, und dass das Verbindungselement ein geschmeidiges Band ist.

2. Vorrichtung (20) nach Anspruch 1, **dadurch gekennzeichnet, dass** eine Klammer zwei elastisch verformbare Arme aufweist, und die lösbare Befestigung des ersten Elements (21) bzw. des zweiten Elements (22) am ersten Artikel (2) bzw. am zweiten Artikel (3) durch Einrasten erfolgt.

3. Vorrichtung (20) nach Anspruch 1 oder 2, **dadurch gekennzeichnet, dass** das Verbindungselement konfiguriert ist, um viele Biegungen um einen Winkel von etwa 180° auszuhalten, ohne zu brechen.

4. Vorrichtung (20) nach einem der Ansprüche 1 bis 3, **dadurch gekennzeichnet, dass** das Verbindungselement kurz ist, um eine steife Verbindung zwischen den zwei Elementen zu gewährleisten, wenn es in der ersten Stellung ist.

5. Vorrichtung (20) nach einem der Ansprüche 1 bis 4, **dadurch gekennzeichnet, dass** das Verbindungselement ein zylindrisches Band mit kreisförmigem Querschnitt ist.

6. Vorrichtung (20) nach einem der Ansprüche 1 bis 5, **dadurch gekennzeichnet, dass** sie durch Formen mindestens eines thermoplastischen Materials,wie ein Polyethylen, ein Polypropylen, ein SBS, ein SEBS, eine Mischung von zwei oder mehr dieser Materialien, oder eines wärmehärtbaren Polymers erhalten wird.

7. Vorrichtung (20) nach einem der Ansprüche 1 bis 6, **dadurch gekennzeichnet, dass**:
i) das erste Element (21) einen ersten offenen Ring (21) aufweist, dessen beide Enden (24, 25) eine Öffnung (23) begrenzen, über die das erste Element auf einen Abschnitt (3) des ersten Artikels (2) eingerastet wird, dessen Querschnitt einem Innenquerschnitt des ersten offenen Rings entspricht;
ii) das zweite Element (22) einen zweiten offenen Ring (22) aufweist, dessen beide Enden (27, 28) eine Öffnung (26) begrenzen, über die das zweite Element auf einen Abschnitt (13) des zweiten Artikels (12) eingerastet wird, dessen Querschnitt einem Innenquerschnitt des zweiten offenen Rings entspricht;
iii) das erste und das zweite Element über ein Verbindungselement (29, 30) verbunden sind, das vorzugsweise gegenüber der Öffnung (23, 26) des ersten und des zweiten Rings (21, 22) angeordnet und so konfiguriert ist, dass die Vorrichtung von der ersten Stellung, in der das erste und das zweite Element (21, 22) nebeneinander zu beiden Seiten einer Ebene lotrecht zur Mittelebene des ersten und des zweiten Rings angeordnet sind, in die zweite Stellung übergehen kann, in der das erste und das zweite Element (21, 22) sich übereinander zu beiden Seiten einer Ebene parallel zur Mittelebene des ersten und des zweiten Rings befinden.

8. Vorrichtung (20) nach Anspruch 7, **dadurch gekennzeichnet, dass** die Innenquerschnitte des ersten und des zweiten offenen Rings (21, 22) sowie die Querschnitte der Abschnitte (3, 13) des ersten und des zweiten Artikels (2, 12) kreisförmig sind.

9. Vorrichtung (20) nach Anspruch 7 oder 8, **dadurch gekennzeichnet, dass** das erste und das zweite Element (21, 22) gleich sind.

10. Vorrichtung (20) nach einem der Ansprüche 7 bis 9, **dadurch gekennzeichnet, dass** der Kreisabschnitt, der vom ersten und vom zweiten Ring (21, 22) gebildet wird, sich über mehr als 180°, und vorzugsweise über einen Winkel erstreckt, der von etwa 190° bis 315° reicht.

11. Vorrichtung (20) nach einem der Ansprüche 7 bis 10, **dadurch gekennzeichnet, dass** der Radius des Kreisabschnitts, der von mindestens einem der ersten und zweiten Ringe (21, 22) gebildet wird, geringer als der oder gleich dem Radius des kreisförmigen Querschnittsabschnitts (3) des ersten Artikels (2) und dem Radius des kreisförmigen Querschnittsabschnitts (13) des zweiten Artikels (12) ist.

12. Vorrichtung (20) nach Anspruch 11, **dadurch gekennzeichnet, dass** der Radius des Kreisabschnitts, der von mindestens einem der ersten und zweiten Ringe (21, 22) gebildet wird, um etwa 1 bis 10 kleiner ist als der Radius des kreisförmigen Querschnittsabschnitts (3) des ersten Artikels (2) und der Radius des kreisförmigen Querschnittsabschnitts (13) des zweiten Artikels (12).

13. Einheit (1), die aufweist:
i) einen ersten Artikel (2), insbesondere in Form eines Behälters, der ein erstes Produkt enthält, insbesondere ein Kosmetikprodukt;
ii) einen zweiten Artikel (12), insbesondere in Form eines Behälters, der ein zweites Produkt, insbesondere ein Kosmetikprodukt, enthält, oder eines Zubehörteils zum Auftragen des ersten Produkts, wobei der erste und der zweite Artikel mittels einer Vorrichtung (20) nach einem der Ansprüche 1 bis 12 zueinander ortsfest gehalten werden.

14. Einheit (1) nach Anspruch 13, **dadurch gekennzeichnet, dass** der erste Artikel (2) ein erstes Schminkprodukt insbesondere für die Lippen oder die Wimpern enthält, während der zweite Artikel (12) ein zweites Produkt enthält, das dazu bestimmt ist, das Aussehen des ersten, insbesondere seinen Glanz, zu verändern.
